# EUROPÄISCHE PATENTSCHRIFT

(11) **EP 1 990 988 B1**
(45) Veröffentlichungstag und Bekanntmachung des Hinweises auf die Patenterteilung: **25.04.2018**
(21) Anmeldenummer: 08103834.1
(22) Anmeldetag: 06.05.2008
(51) Int. Cl.: H04N 1/06, B41F 33/00, B41F 21/10, H04N 1/00, H04N 1/04

(54) **BOGENINSPEKTIONSEINRICHTUNG IN BOGENROTATIONSDRUCKMASCHINEN MIT VON BOGEN ZU BOGEN VERSETZTER ABTASTUNG**
SHEET INSPECTION DEVICE IN SHEET ROTATION PRESSES WITH SAMPLING OFFSET FROM SHEET TO SHEET
DISPOSITIF D'INSPECTION DE FEUILLES DANS DES PRESSES ROTATIVES DE FEUILLES À BALAYAGE DÉCALÉ D'UNE FEUILLE À L'AUTRE

(30) Priorität: 10.05.2007 DE 102007022434
(43) Veröffentlichungstag der Anmeldung: 12.11.2008
(73) Patentinhaber: Heidelberger Druckmaschinen AG, 69115 Heidelberg (DE)
(72) Erfinder: SONNENSCHEIN, Joachim, 64367 Mühltal (DE); BERTI, Christopher, 69234 Dielheim (DE); HUBER, Werner, 69168 Wiesloch (DE)
(74) Vertreter: Haust, Christof

(56) Entgegenhaltungen:
- DE-A1- 4 321 177
- DE-A1- 10 346 782
- DE-A1-102004 021 600
- DE-T2- 69 412 805
- US-A- 4 737 858
- US-B1- 6 185 012
- US-B1- 6 707 583

## Beschreibung

Die Erfindung betrifft eine Vorrichtung zur Bildinspektion von Druckbogen auf einem rotierenden Zylinder insbesondere in Bogenrotationsdruckmaschinen.

Zur Überwachung der Druckqualität sind beim Einsatz von Druckmaschinen im Offsetdruck schon seit Jahren Bildinspektionssysteme Standard. Diese Bildinspektionssysteme können außerhalb oder in der Druckmaschine angeordnet sein und können produzierte Bedruckstoffe farblich oder auf Registerhaltigkeit überprüfen. Dazu werden die zu überprüfenden Bedruckstoffe entweder von einem Offline-Farbmessgerät auf einem Messtisch mit einer scannenden Einrichtung vermessen, oder die Bedruckstoffe werden noch in der Druckmaschine auf einem rotierenden Zylinder von einer Inline-Farbmesseinrichtung erfasst. Die Auflösung solcher Farbmesssysteme kann nicht beliebig groß sein, sie ist Bauart bedingt begrenzt, wobei eine sehr hohe Auflösung entsprechend höhere Kosten verursacht. Daher sind die Auflösungen der Abtasteinrichtung in den Farbmesssystemen meistens in der Größe eines Bildpunktes. Fehlstellen im Bild in Pixelgröße, welche dann zwischen Pixeln der Abtasteinrichtung zu liegen kommen, werden entsprechend mit geringer Signalstärke erfasst, so dass der Fehler nicht genau erfasst werden kann. Die Problematik einer zu geringen Auflösung von scannenden Systemen ist auch im Bereich von optischen Bildscannern bekannt. Bei diesen Bildscannern wird ein Dokument mit einem Scanbalken abgetastet, wobei der Scanbalken einen CCD Chip mit einer bestimmten Auflösung aufweist. Je höher diese Auflösung des CCD Chips ist, desto teuerer wird das Scannersystem.

Aus dem US Patent US 6,707,583 B1 ist ein Bildscanner bekannt, bei dem der CCD Chip in einem zweiten Scanndurchgang um einen halben Bildpunkt versetzt wird. Dabei werden in zwei Scanndurchgängen zwei um einen halben Bildpunkt versetzte Bilder erfasst und anschließend in ein gemeinsames Bild umgerechnet. Auf diese Art und Weise wird die Auflösung des Bildscanners erhöht und es braucht kein teurer hochauflösender CCD Chip eingesetzt werden. Ein solcher Bildscanner ist jedoch als Inline-Farbmesseinrichtung in Druckmaschinen nicht geeignet, da er nur liegende, stillstehende Bogen abtasten kann und relativ langsam arbeitet. Bei den heute üblichen Druckgeschwindigkeiten von 18000 Bogen pro Stunde und mehr scheidet damit der Einsatz eines solchen Bildscanners In der Druckmaschine zur Inline-Farbmessung aus.

Aus der Offenlegungsschrift DE 43 21 177 A1 ist ein Verfahren zur Bildinspektion und Farbmessung bekannt, bei dem mindestens ein Druckprodukt ganzheitlich erfasst wird und aus zumindest einem Messpunkt des Druckproduktes eine Messgröße für die Farbbeurteilung ermittelt wird. Zwar ist dieses Verfahren auch zur Inline-Farbmessung geeignet, allerdings wird hierbei immer derselbe Bildbereich erfasst, womit das Problem der zu geringen Auflösung nicht gelöst ist.

Aus der Offenlegungsschrift DE 10 2004 021 600 A1 ist eine Vorrichtung zur Inline-Überwachung der Druckqualität bekannt, bei der ein bogenförmiger Bedruckstoff von wenigstens einem bogenführenden Element an einer Abtasteinrichtung vorbeigeführt wird. Doch genau wie in DE 43 21 177 A1 wird stets derselbe Bereich des Bedruckstoffes erfasst, weswegen auch hier die Auflösung des Farbmesssystems auch hier nicht erhöht wird.

Aus dem Patent US 4,737,858 ist ein Verfahren bekannt, das die Genauigkeit und das Erscheinungsbild der Druckausgabe verbessert. Dies geschieht an Hand eines Positionskorrektursystems, welches systematische Fehler kompensiert. Dies geschieht dadurch, dass ein Testbild mit dem Originalbild anhand eines Rasters im Mikropixelbereich verglichen wird. Dabei werden Korrekturwerte gesammelt und gespeichert, um die Ausgabequalität des Bildes zu verbessern. Dieser Vorgang wird sooft wiederholt, bis ein Bild in zufriedenstellender Ausgabequalität erreicht ist. Es wird jedoch weder ein Hinweis darauf gegeben, wie ein solches System in einer Druckmaschine implementiert werden kann, noch, wie die für dieses System notwendige Auflösung beim Einsatz in Druckmaschinen erreicht werden kann.

Aus dem Patent US 6,185,012 ist ein Verfahren bekannt, bei dem ein Medium mehrfach gescannt wird, wobei der Scanner Linien auf einem Medium zweimal und dabei versetzt erfasst. Hierdurch wird die Auflösung erhöht. Jedoch geschieht dies durch das mehrfache Scannen eines einzelnen, fixierten Mediums. Ein solches Verfahren ist für eine Druckmaschine mit einer Druckgeschwindigkeit von 18000 Bogen pro Stunde und mehr ungeeignet, da sich die Druckbögen sehr schnell durch die Maschine bewegen und das mehrfache Scannen eines Bogens zu viel Zeit in Anspruch nähme.

Aus der Offenlegungsschrift DE 103 46 782 A1 ist eine Bogentransporttrommel einer Bedruckstoffbogen verarbeitenden Maschine bekannt. Diese ist zwar doppelt groß zur Aufnahme von zwei Bogen ausgeführt, hat jedoch keine Messvorrichtung, die die beiden Bögen jeweils um einen Bruchteil eines Bildpunkts versetzt abtastet.

Aus dem Patent DE 694 12 805 T2 ist ein beweglicher Druckkopf bekannt, der mittels eines piezoelektrischen Stellgliedes bewegt wird. Hier soll jedoch kein Scanner bewegt werden.

Es ist daher Aufgabe der vorliegenden Erfindung, eine Vorrichtung zur Bildinspektion von Druckbogen auf einem rotierenden Zylinder zu schaffen, welche es ermöglicht auch Bildfehler in Größe der minimalen Auflösung der Abtasteinrichtung zuverlässig zu erkennen.

Erfindungsgemäß wird die Aufgabe durch Patentanspruch 1 gelöst. Vorteilhafte Ausgestaltungen der Erfindung sind den Unteransprüchen und den Zeichnungen zu entnehmen. Die erfindungsgemäße Vorrichtung eignet sich Insbesondere zur Inline-Bildvermessung In Offsetbogenrotationsbogendruckmaschlnen, sie kann aber auch in anderen Maschinen mit rotierenden Zylindern eingesetzt werden. Die auf einem Zylinder rotierenden Druckbogen in der Druckmaschine werden von einer Bildinspektionseinrichtung erfasst. Die Bildinspektionseinrichtung ist dabei ein mit Messköpfen oder einer Zeilenscaneinrichtung versehener Messbalken, an dem die bogenförmigen Bedruckstoffe mit hoher Geschwindigkeit vorbeigeführt werden. Durch diese Transportgeschwindigkeit des Druckbogens entsteht der Scanvorgang. Entsprechend schnell muss die Scaneinrichtung ausgelegt sein, um mit einer entsprechend hohen Abtastfrequenz die Bogen erfassen zu können. Die Scaneinrichtung kann aber auch so ausgeführt sein, dass sie nur Teile und Bildbereiche eines Druckbogens erfasst und nicht den ganzen Druckbogen. Wenn ein Bildfehler in ungefähr der Größe eines Pixels der Abtasteinrichtung auf dem Druckbogen festgestellt wird, welcher zwischen den Abtastpixeln zu liegen kommt, so erzeugt dieser Bildfehler ein relativ geringes Ausgangssignal. Falls der Pixel genau zwischen vier Pixeln der Abtasteinrichtung zu liegen kommt, so beträgt die Signalintensität nur ein Viertel von dem, was sie betragen würde, wenn der fehlerhafte Bildpunkt direkt unter einem Pixel der Abtasteinrichtung liegen würde. Dies mindert die Inspektionsleistung erheblich. Meist handelt es sich bei den Bildfehlern nicht um einmalige Fehler, sondern diese Fehler sind auf allen gerade produzierten Druckbogen vorhanden. Dieses Auftreten des Fehlers kann dazu genutzt werden, die Bildmessung der nachfolgenden Bogen mit einzubeziehen. Insbesondere können die Bogen abwechselnd um einen

Bruchteil eines Pixels versetzt abgetastet werden. Deshalb ist erfindungsgemäß vorgesehen, dass nach dem Erfassen eines ersten Druckbogens durch die Abtasteinrichtung wenigstens einer der nachfolgenden Druckbogen um einen Bruchteil eines Bildpunktes versetzt von der Abtasteinrichtung erfasst wird. Da die Abtasteinrichtung möglichst nicht bewegt werden soll, wird die Bewegung des Druckbogens in Transportrichtung unter der Abtasteinrichtung ausgenutzt. Der Abtastvorgang durch die Abtasteinrichtung wird bei jedem Bogen durch ein Startsignal ausgelöst. Um nun einen Bogen um einen Bruchteil eines Bildpunktes versetzt abzutasten, wird dieses Ausgangssignal zur Ansteuerung der Abtasteinrichtung zeitlich ein wenig verzögert oder beschleunigt, so dass einer der nächsten Bogen leicht zeitlich versetzt erfasst wird. Dies bedeutet, dass der Abtastvorgang leicht zeitlich versetzt startet und somit der Abtastvorgang nicht direkt mit dem Bildraster des Bogens zusammenfällt, sondern leicht versetzt startet. Auf diese Art und Weise werden die Bildpunkte dieses Druckbogens um einen Bruchteil versetzt von der Abtasteinrichtung erfasst, ohne dass die Abtasteinrichtung selbst versetzt oder bewegt werden muss. Das ganze wird über das Auslösesignal der Abtasteinrichtung gesteuert. Dazu ist die Abtasteinrichtung vorzugsweise mit einem Rechner verbunden, welcher über Drehgeber die augenblickliche Maschinengeschwindigkeit erfasst und so den Abtastvorgang an die Maschinengeschwindigkeit angepasst startet. Als Abtasteinrichtung kann eine Kamera mit einem vorgegebenen Pixelraster eingesetzt werden. Eine solche Kamera kann dazu einen CCD Chip mit einem Pixelraster in vorgegebener Auflösung aufweisen. Diese vorgegebene Auflösung stellt die physikalische Auflösung der Abtasteinrichtung dar, welche aus Kostengründen die minimale Bildpunktgröße oder Rastergröße des Druckbogens nicht unterschreitet.

In einer ersten Ausgestaltung der Erfindung ist vorgesehen, dass der Zylinder in oder zwischen den Druckwerken angeordnet ist. In diesem Fall wird die erfindungsgemäße Bildinspektionsvorrichtung insbesondere als Inline-Farbmesseinrichtung verwendet. Als Zylinder eignen sich insbesondere Transportzylinder zwischen den Druckwerken oder die Gegendruckzylinder in den Druckwerken. In einer besonders vorteilhaften Ausgestaltung der Erfindung ist der rotierende Zylinder der Gegendruckzylinder im letzten Druckwerk einer Druckmaschine. Ausgangs des letzten Druckwerks sind alle Farbauszüge auf dem Druckbogen vorhanden und der Druckbogen kann so komplett farblich vermessen und mit der Druckvorlage verglichen werden.

Weiterhin ist vorgesehen, dass wenigstens einer der Bogen gegenüber den weiteren Bogen um einen halben Bildpunkt in Bogentransportrichtung versetzt erfasst wird. Wie Eingangs bereits erwähnt stellen insbesondere Bildfehler ein Problem dar, welche sich genau in der Mitte zwischen vier Pixeln der Abtasteinrichtung befinden, da hier die Intensität minimal wird. Wenn nun einer der weiteren Bogen um genau einen halben Bildpunkt in Bogentransportrichtung versetzt erfasst wird, so wird zumindest in Bogentransportrichtung bei einem solchen ansonsten nur mit minimaler Intensität abgetasteten Bildpunkt das Signal deutlich erhöht. Damit kann der Bildfehler sicherer erkannt werden.

Vorteilhafter Weise ist außerdem vorgesehen, dass der Zylinder doppelt groß zur Aufnahme von zwei Bogen ausgeführt ist und dass die beiden Bogen jeweils um einen Bruchteil eines Bildpunktes versetzt abgetastet werden. Solche Zylinder werden insbesondere als Transportzylinder zwischen Druckwerken verwendet und sind doppelt groß ausgeführt. Dies bedeutet, dass die Transportzylinder den doppelten Durchmesser gegenüber den Gegendruckzylinder aufweisen. Auf diese Art und Weise ist es möglich, immer zwei Druckbogen zugleich auf dem Transportzylinder zu haben. Diese beiden auf dem Transportzylinder befindlichen Bogen werden erfindungsgemäß um einen Bruchteil eines Bildpunktes versetzt abgetastet. Dies bedeutet, dass die Abtasteinrichtung bei der Erfassung des zweiten Bogens auf dem Zylinder um eine geringe Zeitspanne versetzt verzögert startet. Bei dieser Ausführungsform wird somit jeder zweite Bogen gegenüber seinem Vorgänger um einen Bruchteil eines Bildpunktes versetzt abgetastet, so dass immer zwei hintereinander folgende Bogen versetzt abgetastet werden und somit auch Bildfehler in der Größenordnung der Auflösung der Abtasteinrichtung zuverlässig erkannt werden können, wenn sie sich zwischen den Pixeln der Abtasteinrichtung befinden. Entsprechend können auch dreifach große oder noch größere Transportzylinder eingesetzt werden, hier kann ebenfalls abwechselnd oder nur jeder dritte bzw. n-te Bogen versetzt abgetastet werden.

In einer erweiterten Ausführung der Erfindung ist vorgesehen, dass Bogen auf dem Zylinder um einen Bruchteil eines Bildpunktes quer zur Bogentransportrichtung versetzt abgetastet werden. Bei dieser verbesserten Ausführung wird zusätzlich zur versetzten Abtastung in Bogentransportrichtung auch versetzt quer zur Bogentransportrichtung abgetastet. Damit wird auch ein fehlerhafter Bildpunkt mit maximaler Intensität abgetastet, welcher sich genau in der Mitte zwischen vier Pixeln der Abtasteinrichtung befindet. Nicht nur in Bogentransportrichtung sondern auch quer zur Bogentransportrichtung wird die Abtastintensität so erhöht. Ein solcher Abtastvorgang wird dadurch ermöglicht, dass die Abtasteinrichtung quer zur Bogentransportrichtung wenigstens um Bruchteile eines Bildpunktes verschiebbar ist. Da die Pixel eine sehr geringe Größe aufweisen, muss die Abtasteinrichtung nur ein klein wenig verschoben werden. Dieses Verschieben der Abtasteinrichtung quer zur Bogentransporteinrichtung kann somit auch durch ein hochpräzises piezoelektrisches Stellelement mit geringem Stellweg geschehen. Der Vorteil von piezoelektrischen Stellelementen liegt darin, dass sie sehr schnell reagieren und verschleiß frei sind. Somit ist eine präzise Verschiebung der Abtasteinrichtung zwischen zwei Bogen um die Bruchteile eines Bildpunktes quer zur Bogentransportrichtung gut zu realisieren. Auch bei dieser Ausführungsform muss die Abtasteinrichtung nicht in Bogentransportrichtung verschoben werden, da hier die Abtastung weiterhin durch die Auslöseverzögerung oder Beschleunigung beim Abtastvorgang erfolgt. Auf diese Art und Weise kann die Auflösung bei Inline-Farbmessgeräten gesteigert werden, ohne dass die physikalische Auflösung des Abtastchips vergrößert werden muss.

Die vorliegende Erfindung wird nachfolgend anhand mehrerer Figuren näher beschrieben und erläutert. Es zeigen:
- Fig. 1:: eine Bogenrotationsdruckmaschine mit einer Inline-Messvorrichtung im letzten Druckwerk,
- Fig. 2:: den Abtastvorgang eines Bildfehlers nach dem Stand der Technik und

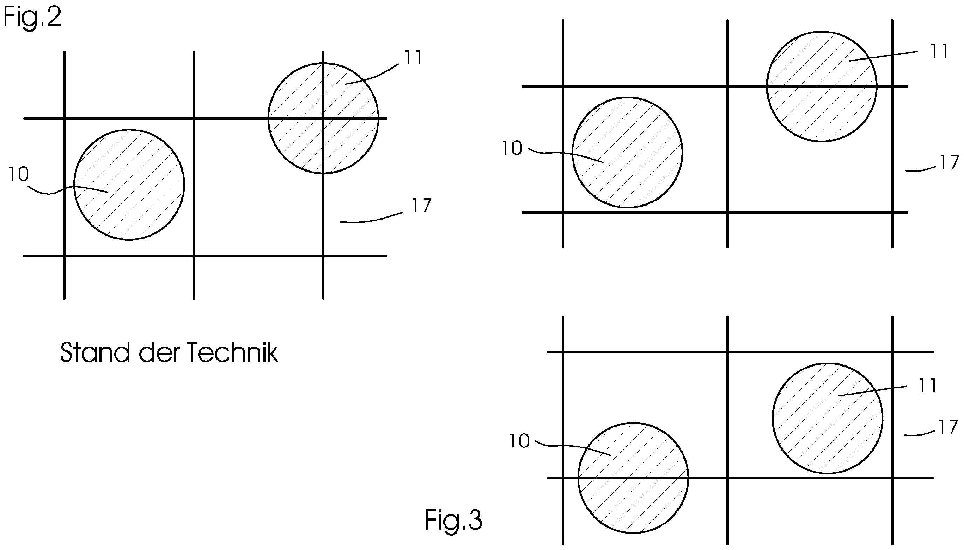

- Fig. 2:: die Abtastung eines Bildfehlers in Bogentransportrichtung mit der erfindungsgemäß verbesserten Abtasteinrichtung.

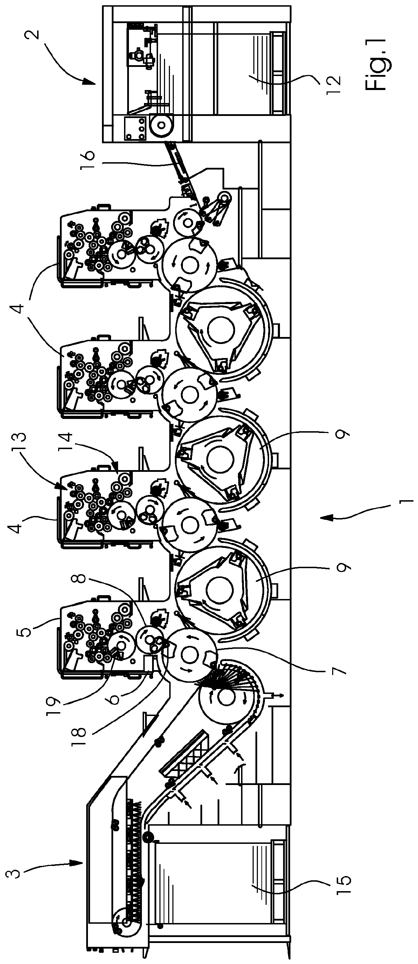

In Figur 1 ist eine Bogendruckmaschine 1 mit vier Druckwerken 4, 5 abgebildet. Die Druckmaschine 1 weist einen Anleger 2 auf, in dem einem Anlegerstapel 12 bogenförmige Bedruckstoffe 16 entnommen und dem ersten Druckwerk 4 der Druckmaschine 1 zugefördert werden. Der Druckbogen 16 wird zwischen den Druckwerken 4, 5 über Transportzylinder 9 transportiert, welche doppelt groß ausgeführt sind. Dies bedeutet, dass der Durchmesser der Transportzylinder 9 den doppelten Durchmesser der Gegendruckzylinder 7 in den Druckwerken 4, 5 aufweist. Jedes der Druckwerke 4, 5 verfügt über ein Farbwerk 13 und ein Feuchtwerk 14, welche Druckfarbe auf einen Plattenzylinder 19 übertragen. Vom Plattenzylinder 19 wird die Druckfarbe über einen Gummituchzylinder 8 auf den Druckbogen 16 übertragen, welcher sich im Druckspalt zwischen Gegendruckzylinder 7 und Gummituchzylinder 8 befindet. Auf den Transportzylindern 9 und den Gegendruckzylindern 7 werden die Druckbogen 16 mittels Bogengreifern 18 gehalten. Die Bogengreifer 18 erfassen den Druckbogen 16 während der Übergabe zwischen den Zylindern 7, 9 und halten ihn auf dem jeweiligen Zylinder fest. Ausgangs des letzten Druckwerkes 5 schließt sich ein Ausleger 3 an, in dem die fertigen Druckbogen 16 auf einem Auslegerstapel 15 abgelegt werden. Weiterhin weist das letzte Druckwerk 5 ein Inline-Messgerät 6 zur Bildinspektion auf. Dieses Inline-Messgerät 6 ist dazu vorgesehen, die fertig produzierten Druckbogen 16 ausgangs des letzten Druckwerkes 5 auf ihre Druckqualität hin zu überprüfen. Dazu weist das Inline-Messgerät 6 eine Abtasteinrichtung auf, welche die Druckbogen 16 auf dem Gegendruckzylinder 7 im letzten Druckwerk 5 erfasst. Während des Abtastvorgangs werden die Druckbogen 16 von den Greifern 18 auf dem Gegendruckzylinder 7 im letzten Druckwerk 5 festgehalten.

Bei herkömmlichen Abtasteinrichtungen wird der Abtastvorgang des Inline-Messgerätes 6 in Abhängigkeit der Maschinengeschwindigkeit der Druckmaschine 1 immer gleich synchronisiert gestartet. Die auf den Druckbogen 16 vorhandenen Bildpunkte 10 fallen somit wie in Figur 2 gezeigt immer in das gleiche Abtastungsraster 17 der Inline-Messeinrichtung 6. Wenn sich ein fehlerhafter Bildpunkt 11 jedoch genau im Zwischenraum eines solchen Abtastungsrasters 17 der Inline-Messeinrichtung 6 befindet, so erfassen ihn die Pixel der Inline-Messeinrichtung 6 nur mit einer geringen Intensität. Dies führt zu einer Minderung der Inspektionsleistung, wenn im ungünstigsten Fall wie in Figur 2 der fehlerhafte Bildpunkt 11 sich gleichmäßig über vier Abtastpixel verteilt.

In Figur 3 ist der verbesserte Abtastvorgang in Bogentransportrichtung abgebildet. In der oberen Hälfte von Figur 3 ist der Abtastvorgang an einem ersten Bogen 16 gezeigt, bei dem der fehlerhafte Bildpunkt 11 um ein halbes Pixel verschoben in Bogentransportrichtung ist. Um auch den fehlerhaften Bildpunkt 11 mit hoher Intensität zu erfassen, ist in der zweiten unteren Bildhälfte von Figur 3 der versetzte Abtastvorgang dargestellt. Bei diesem um einen halben Bildpunkt versetzten Abtastvorgang fällt nun auch der fehlerhafte Bildpunkt 11 genau in das Abtastungsraster 17 der Inline-Messeinrichtung 6. Über diesen Abtastvorgang werden die vom Gegendruckzylinder 7 unter der Inline-Messvorrichtung 6 hindurch transportierten Druckbogen 16 immer abwechselnd um einen halben Bildpunkt 10, 11 versetzt abgetastet. Dazu startet der Abtastvorgang bei jedem zweiten Druckbogen 16 entsprechend zeitlich versetzt, so dass jeder zweite Druckbogen 16 um einen halben Bildpunkt versetzt abgetastet wird. Dieser veränderte Abtastzeitpunkt ist von der Geschwindigkeit der Druckmaschine abhängig, so dass dem Inline-Messgerät 6 über den Maschinenrechner der Druckmaschine 1 die aktuelle Geschwindigkeit der Druckmaschine 1 zugeführt werden muss. Die so bekannte aktuelle Druckgeschwindigkeit der Maschine 1 wird in dem Inline-Messgerät 6 zur Berechnung des passenden Abtastzeitpunktes verwendet. Auf diese Art und Weise können zuverlässig auch fehlerhafte Bildpunkte 11 erkannt werden, welche in der Größenordnung des Abtastungsrasters 17 des Inline-Messgerät 6 liegen, aber nicht genau unter den Pixeln des Abtastgeräts der Inline-Messeinrichtung 6 zu liegen kommen. Die Abtasteinrichtung des Inline-Messgeräts 6 muss dazu nicht in Bogentransportrichtung der Bedruckstoffe 16 verschoben werden, sondern es reicht aus, den Abtastzeitpunkt entsprechend verzögert auszulösen, so dass der Abtastvorgang um einen Bruchteil eines Bildpunktes, 10, 11 versetzt startet.

### Bezugszeichenliste

- 1: Druckmaschine
- 2: Anleger
- 3: Ausleger
- 4: Druckwerk
- 5: letztes Druckwerk
- 6: Inline-Messgerät
- 7: Gegendruckzylinder
- 8: Gummituchzylinder
- 9: Transportzylinder
- 10: Bildpunkt
- 11: Fehlerhafter Bildpunkt
- 12: Anlegerstapel
- 13: Farbwerk
- 14: Feuchtwerk
- 15: Auslegerstapel
- 16: Druckbogen
- 17: Abtastungsraster
- 18: Bogengreifer
- 19: Plattenzylinder

## Patentansprüche

1. Vorrichtung zur Bildinspektion von Druckbogen (16) auf einem rotierenden Zylinder (7, 9) mit einer Abtasteinrichtung (6),
**dadurch gekennzeichnet,**
**dass** die Abtasteinrichtung (6) zur Erfassung einzelner Bildpunkte (10, 11) der Druckbogen (16) auf dem rotierenden Zylinder (7, 9) vorgesehen ist und dass nach Erfassung eines ersten Druckbogens (16) durch die Abtasteinrichtung (6) auf dem rotierenden Zylinder (7, 9) wenigstens einer der nachfolgenden Druckbogen (16) um einen Bruchteil eines Bildpunktes (10, 11) versetzt von der Abtasteinrichtung (6) erfasst wird.

2. Vorrichtung nach Anspruch 1,
**dadurch gekennzeichnet,**
**dass** die Abtastvorrichtung (6) eine Kamera mit einem vorgegebenen Pixelraster ist.

3. Vorrichtung nach Anspruch 1 oder 2,
**dadurch gekennzeichnet,**
**dass** der rotierende Zylinder (7, 9) zwischen zwei Druckwerken (4, 5) angeordnet ist.

4. Vorrichtung nach Anspruch 1 oder 2,
**dadurch gekennzeichnet,**
**dass** der rotierende Zylinder (7,9) der Gegendruckzylinder (7, 9) im letzten Druckwerk (5) einer Druckmaschine (1) ist.

5. Vorrichtung nach einem der vorhergehenden Ansprüche,
**dadurch gekennzeichnet,**
**dass** wenigstens einer der Bogen (16) gegenüber den weiteren Bogen (16) um einen halben Bildpunkt in Bogentransportrichtung versetzt erfasst wird.

6. Vorrichtung nach Anspruch 3,
**dadurch gekennzeichnet,**
**dass** der rotierende Zylinder (9) doppelt groß zur Aufnahme von zwei Bogen (16) ausgeführt ist und dass die beiden Bogen jeweils um einen Bruchteil eines Bildpunktes (10, 11) versetzt abgetastet werden.

7. Vorrichtung nach Anspruch 6,
**dadurch gekennzeichnet,**
**dass** der Abtastzeitpunkt des zweiten Bogens (16) auf dem rotierenden Zylinder (9) um einen Bruchteil eines Bildpunktes (10, 11) versetzt startet.

8. Vorrichtung nach einem der vorhergehenden Ansprüche,
**dadurch gekennzeichnet,**
**dass** nach Erfassung eines ersten Druckbogens (16) durch die Abtasteinrichtung (6) einer der nachfolgenden Druckbogen (16) auf dem rotierenden Zylinder (7) um einen Bruchteil eines Bildpunktes (10, 11) quer zur Bogentransportrichtung versetzt abgetastet wird.

9. Vorrichtung nach Anspruch 8,
**dadurch gekennzeichnet,**
**dass** die Abtasteinrichtung (6) quer zur Bogentransportrichtung um den Bruchteil eines Bildpunkts (10, 11) verschiebbar ist.

10. Vorrichtung nach Anspruch 9,
**dadurch gekennzeichnet,**
**dass** zum Verschieben der Abtasteinrichtung (6) quer zur Bogentransportrichtung ein piezoelektrisches Element vorhanden ist.

11. Druckmaschine (1) mit einer Vorrichtung zur Bildinspektion nach einem der Ansprüche 1 bis 10.

## Claims

1. Device for inspecting images on print sheets (16) on a rotating cylinder (7, 9) with a scanning device (6),
**characterized in**
**that** the scanning device (6) is provided to detect individual image dots (10, 11) of the print sheets (16) on the rotating cylinder (7, 9) and that after detecting a first print sheet (16) by means of the scanning device (6) on the rotating cylinder (7, 9), at least one of the following print sheets (16) is detected by the scanning device (6) with an offset of a fraction of an image dot (10, 11).

2. Device according to claim 1,
**characterized in**
**that** the scanning device (6) is a camera with a predefined pixel grid.

3. Device according to claim 1 or 2,
**characterized in**
**that** the rotating cylinder (7, 9) is disposed between two printing units (4, 5).

4. Device according to claim 1 or 2,
**characterized in**
**that** that the rotating cylinder (7, 9) is the impression cylinder (7, 9) in the last printing unit (5) of a printing press (1).

5. Device according to any one of the preceding claims,
**characterized in**
**that** at least one of the sheets (16) is detected with an offset of half an image dot relative to the further sheets (16).

6. Device according to claim 3,
**characterized in**
**that** the rotating cylinder (9) is double-sized to accommodate two sheets (16) and that the two sheets are respectively scanned with an offset of a fraction of an image dot (10, 11).

7. Device according to claim 6,
**characterized in**
**that** the scanning instant of the second sheet (16) on the rotating cylinder (9) starts with an offset of a fraction of an image dot (10, 11).

8. Device according to any one of the preceding claims,
**characterized in**
**that** after the scanning of a first print sheet (16) by the scanning device (6), one of the following print sheets (16) on the rotating cylinder (7) is scanned with an offset of a fraction of an image dot (10, 11) in a direction transverse to the direction of sheet transport.

9. Device according to claim 8,
**characterized in**
**that** the scanning device (6) is movable by a fraction of an image dot (10, 11) in a direction transverse to the direction of sheet transport.

10. Device according to claim 9,
**characterized in**
**that** a piezoelectric element is present to move the scanning device (6) in a direction transverse to the direction of sheet transport.

11. Printing press (1) including a device for inspecting images according to any one of claims 1 to 10.

## Revendications

1. Dispositif pour l'inspection d'image de feuilles imprimées (16) sur un cylindre rotatif (7, 9) avec un dispositif de balayage (6)
**caractérisée en ce**
**que** le dispositif de balayage (6) est prévu pour la détection des points d'image (10, 11) des feuilles d'impression (16) sur le cylindre rotatif (7, 9) et qu'après la détection d'une première feuille imprimée (16) par le dispositif de balayage (6) sur le cylindre rotatif (7, 9), au moins l'une des feuilles imprimées suivantes (16) est détectée d'une fraction d'un point d'image (10, 11), par le dispositif d'image (6).

2. Dispositif selon la revendication 1,
**caractérisée en ce**
**que** le dispositif de balayage (6) est une caméra avec une grille de pixels prédéterminée.

3. Dispositif selon la revendication 1,
**caractérisée en ce**
**que** le cylindre rotatif (7, 9) est disposé entre deux groupes d'impression (4, 5).

4. Dispositif selon la revendication 1 ou 2,
**caractérisée en ce**
**que** le cylindre rotatif (7, 9) est le cylindre de contre-pression (7, 9) dans le dernier groupe d'impression.

5. Dispositif selon l'une des revendications précédentes,
**caractérisée en ce**
**qu'**au moins l'une des feuilles (16) est détectée en décalé par rapport à la feuille suivante (16) d'un demi-point d'image dans la direction de transport de feuilles.

6. Dispositif selon la revendication 3,
**caractérisée en ce**
**que** le cylindre rotatif (9) est réalisé de taille double pour la réception de deux feuilles (16) et que les deux feuilles sont balayées en décalé respectivement d'une fraction d'un point d'image (10, 11).

7. Dispositif selon la revendication 6,
**caractérisée en ce**
**que** le moment de balayage de la seconde feuille (16) sur le cylindre rotatif (9) démarre en décalé d'une fraction d'un point d'image (10, 11).

8. Dispositif selon l'une des revendications précédentes,
**caractérisée en ce**
**qu'**après la détection d'une première feuille d'impression (16) par le dispositif de balayage (6), l'une des feuilles imprimées suivantes (16) sur le cylindre rotatif (7) est balayée en décalé d'une fraction d'un point d'image (10, 11) transversalement à la direction de transport de feuille.

9. Dispositif selon la revendication 8,
**caractérisée en ce**
**que** le dispositif de balayage (6) est mobile transversalement à la direction de transport de feuille d'une fraction d'un point d'image (10, 11).

10. Dispositif selon la revendication 9,
**caractérisée en ce**
**que** pour le déplacement du dispositif de balayage (6) transversalement à la direction de transport de feuille, il est prévu un élément piézoélectrique.

11. Machine d'impression (1) avec un dispositif pour l'inspection d'image selon l'une des revendications 1 à 10.
